# EUROPÄISCHE PATENTSCHRIFT

(11) **EP 4 250 030 B1**
(45) Veröffentlichungstag und Bekanntmachung des Hinweises auf die Patenterteilung: **31.07.2024**
(21) Anmeldenummer: 22163208.6
(22) Anmeldetag: 21.03.2022
(51) Int. Cl.: G05B 19/418

(54) **EIN-/AUSGABEVORRICHTUNG UND STEUERSYSTEM FÜR EINE AUTOMATISIERUNGSPLATTFORM**
INPUT / OUTPUT DEVICE AND CONTROL SYSTEM FOR AN AUTOMATION PLATFORM
DISPOSITIF D'ENTRÉE / SORTIE ET SYSTÈME DE COMMANDE POUR UNE PLATEFORME D'AUTOMATISATION

(43) Veröffentlichungstag der Anmeldung: 27.09.2023
(73) Patentinhaber: Bachmann GmbH, 6800 Feldkirch (AT)
(72) Erfinder: MORSCHER, Ambros, 6751 Braz (AT); RIEDER, Mathias, 6845 Hohenems (AT)
(74) Vertreter: Kraus & Lederer PartGmbB

(56) Entgegenhaltungen:
- EP-A1- 1 624 351
- EP-A1- 3 712 722
- GB-A- 2 358 559
- US-A1- 2006 031 577
- US-A1- 2018 276 170

## Beschreibung

### GEBIET DER ERFINDUNG

Die vorliegende Erfindung betrifft eine konfigurierbare Ein-/Ausgabevorrichtung für eine Automatisierungsplattform. Die vorliegende Erfindung betrifft ferner ein konfigurierbares Steuersystem für eine Automatisierungsplattform, welches zur Kommunikation mit einer konfigurierbaren Ein-/Ausgabevorrichtung ausgestaltet ist, sowie eine Automatisierungsplattform mit einer konfigurierbaren Ein-/Ausgabevorrichtung und einem konfigurierbaren Steuersystem.

### HINTERGRUND

Automatisierungssysteme zur Steuerung eines technischen Prozesses oder einer technischen Anlage umfassen üblicherweise eine zentrale Steuerung. Die Steuerung umfasst beispielsweise ein oder mehrere Anwenderprogramme, die über ein Laufzeitmodul und ein oder mehrere Kommunikationsschnittstellenmodule mit Ein-/Ausgabevorrichtungen und/oder Feldgeräten des Automatisierungssystems kommuniziert. Die Kommunikationsschnittstellenmodule können dabei die Kommunikation über Feldbusse mit verschiedenen Protokollen bereitstellen.

Die Ein-/Ausgabevorrichtungen arbeiten als Schnittstelle zwischen Feldebene und Steuerungsebene. Die Ein-/Ausgabevorrichtungen können zum Beispiel standardisierte elektrische Kommunikationsschnittstellen für Sensoren, sogenannten Field Sensors, und Aktoren, sogenannten Field Actors, sowie eine digitale Schnittstelle zu einem entsprechenden Kommunikationsschnittstellenmodul zur Verfügung stellen. Die Sensoren und Aktoren sind Funktionseinheiten des Automatisierungssystems zugeordnet. Dabei kann ein Typ von einem Sensor oder Aktor in unterschiedlichen Funktionseinheiten unterschiedliche Funktionalitäten realisieren. Den Sensoren und Aktoren zugeordnete Parameter und Funktionen, wie zum Beispiel eine Alarmauslösung in Abhängigkeit einer Alarmschwelle bei Sensoren oder eine Begrenzung eines Einstellbereichs von Aktoren, können in Abhängigkeit von ihrer Zuordnung zu einer Funktionseinheit unterschiedlich sein.

Entsprechende Programmierungen können in den Anwenderprogrammen, dem Laufzeitmodul, den Kommunikationsschnittstellenmodulen und/oder den Feldgeräten vorgesehen sein. Dies ist bei der Einrichtung, Installation und Erweiterung des Automatisierungssystems zu berücksichtigen. Die Ein/Ausgabevorrichtung kann einen Sensor oder Aktor somit abstrakt auf der Steuerungsebene darstellen. Wenn beispielsweise ein Sensor andere Einstellungen als ein anderer Sensor benötigt, kann dies auf der Ebene der Ein/Ausgabevorrichtung unabhängig von der Darstellung auf der Steuerungsebene realisiert werden.

Bei der Integration von Ein-/Ausgabevorrichtungen kann ein erheblicher manueller Aufwand entstehen. Die Steuerung kann für die Integration Informationen und Resourcen, wie z.B. Dokumentation, Treiber, Beschreibungen etc., benötigen. Diese können über externe Quellen wie Online-Kataloge oder Installer/Tools zur Verfügung gestellt werden. Informationen und Resourcen können spezifisch für Typen und Versionen der Ein-/Ausgabevorrichtungen vorgesehen sein. Ferner kann beim Ersetzen eines Sensors oder Aktors, beispielsweise nach einem Defekt, ein anderer Typ von Sensor oder Aktor zum Einsatz kommen, sodass eine dem Sensor oder Aktor zugeordnete Programmierung bzw. Konfiguration zu ändern ist. Dies kann zu einem zusätzlichen Aufwand für Programmierung und Test sowie zu Fehlern führen.

Das Dokument EP 3 712 722 A1 betrifft ein System, eine Vorrichtung und ein Verfahren zur Verwaltung der Verbindung zwischen Feldgeräten und Automatisierungsgeräten in einer Industrieanlage.

Das Dokument EP 1 624 351 A1 bezieht sich auf die automatische Konfiguration eines Industriesystems, die zumindest teilweise auf mit dem System verbundenen Metadaten basiert.

Das Dokument GB 2 358 559 A bezieht sich auf ein Prozesssteuerungskonfigurationssystem, das die Konfiguration und Steuerung von Gerätenetzwerken mithilfe einer lokalen oder dedizierten Eingabe-/ Ausgabeschnittstelle mit der Konfiguration und Steuerung von Gerätenetzwerken mithilfe einer entfernten Eingabe-/Ausgabeschnittstelle integriert, wie z. B. die Verwendung der Profibus-Schnittstelle.

Das Dokument US 2018/276170 A1 betrifft einen Koppler für ein Automatisierungssystem.

Das Dokument US 2006/031577 A1 bezieht sich auf ein Schnittstellenmodul zur Fernverarbeitung und Protokollkonvertierung.

### ZUSAMMENFASSUNG DER ERFINDUNG

Es besteht ein Bedarf, ein Automatisierungssystem zu verbessern, um Kosten und Fehler bei der Einrichtung, Erweiterung und Instandhaltung zu verringern.

Gemäß der vorliegenden Erfindung werden eine konfigurierbare Ein-/ Ausgabevorrichtung und ein konfigurierbares Steuersystem bereitgestellt, wie sie in den unabhängigen Ansprüchen definiert sind. Die abhängigen Ansprüche definieren Ausführungsformen der Erfindung.

Ein Aspekt der vorliegenden Erfindung betrifft eine konfigurierbare Ein-/Ausgabevorrichtung für eine Automatisierungsplattform. Die Automatisierungsplattform kann für Automatisierungssysteme verschiedener Bereiche verwendet werden, beispielsweise im Bereich erneuerbarer Energien, wie zum Beispiel Windkraftanlagen, Wasserkraftanlagen, Biogasanlagen oder Fotovoltaikanlagen, im Bereich von Industrieanwendungen, beispielsweise in der Schwerindustrie, sowie im Bereich maritimer Anlagen, beispielsweise auf Spezialschiffen oder Offshore-Anlagen.

Die Ein-/Ausgabevorrichtung ist als Kommunikationsschnittstelle zwischen einer Feldebene und einer Steuerungsebene der Automatisierungsplattform ausgestaltet. Die Ein-/Ausgabevorrichtung umfasst mindestens eine Feldschnittstelle, eine Steuerungsschnittstelle, eine Speichervorrichtung und eine Verarbeitungsvorrichtung. Jede der mindestens einen Feldschnittstelle ist für eine Kommunikation von Signalen mit einem Sensor oder Aktor der Feldebene ausgestaltet. Der Sensor bzw. Aktor ist einer Funktionseinheit zugeordnet, um eine Funktionalität der Funktionseinheit zu realisieren. Beispielsweise kann die Feldschnittstelle mindestens einen elektrischen Anschluss umfassen, über den die Signale als zugeordnete Strom- oder Spannungsgrößen übertragen werden. Die Signale können beispielsweise analoge oder digitale Signale umfassen. Die Steuerungsschnittstelle ist für eine Kommunikation mit einem Steuersystem der Steuerungsebene ausgestaltet. Die Signale auf der Steuerungsschnittstelle können beispielsweise Protokollelemente einer Busverbindung umfassen, zum Beispiel Telegramme eines Feldbusses.

Die Speichervorrichtung ist zum Speichern einer Vorrichtungsinformation vorgesehen. Die Vorrichtungsinformation stellt eine Zuordnung zwischen den Signalen auf der mindestens einen Feldschnittstelle und den entsprechenden Signalen auf der Steuerungsschnittstelle bereit. Beispielsweise kann die Vorrichtungsinformation eine Zuordnung zwischen Anschlüssen der Ein-/Ausgabevorrichtung, zum Beispiel einem Anschlussstiftbezeichner, und einem bestimmten Sensoren oder Aktor bereitstellen. Die Vorrichtungsinformation kann ferner eine Adressierung auf der Seite der Steuerungsschnittstelle zur Ansteuerung des Sensors oder Aktors über die zugeordneten Anschlüsse bereitstellen.

Außerdem umfasst die Vorrichtungsinformation eine Zuordnung zwischen den Signalen auf der Steuerungsschnittstelle und der Funktionalität der Funktionseinheit. Dabei kann die Funktionalität der Funktionseinheit unabhängig von Signalen auf der Steuerungsschnittstelle definiert sein, sodass die Funktionalität unabhängig von spezifisch verwendeter Hardware von einem Anwenderprogramm angesteuert werden kann. Die Funktionalität der Funktionseinheit kann somit abstrakt definiert sein. Funktionalitäten einer Funktionseinheit "Motor" können beispielsweise eine aktuelle Drehzahl, ein aktuelles Drehmoment, eine zugeführte Spannung oder ein zugeführter Strom sein. Funktionalitäten einer Funktionseinheit "Gondel" eines Windrades können beispielsweise eine aktuelle Drehposition und eine Sollposition sein.

Die Verarbeitungsvorrichtung ist ausgestaltet, auf der Grundlage der Vorrichtungsinformation die Signale auf der mindestens einen Feldschnittstelle in Signale auf der Steuerungsschnittstelle und umgekehrt umzusetzen.

Die Vorrichtungsinformation kann beispielsweise als Ganzes oder in Teilen aus der Speichervorrichtung ausgelesen oder in die Speichervorrichtung geschrieben werden. Die Speichervorrichtung kann mit der Verarbeitungsvorrichtung gekoppelt sein. Die Verarbeitungsvorrichtung kann beispielsweise eine Mikroprozessorsteuerung umfassen. Die Speichervorrichtung kann beispielsweise einen nichtflüchtigen veränderlichen Speicher umfassen, beispielsweise einen Flash-Speicher, ein batteriegepuffertes RAM oder eine Festplatte.

Die Vorrichtungsinformation kann eine Selbstbeschreibung der Ein-/Ausgabevorrichtung einschließlich Informationen zu daran angeschlossenen Sensoren und/oder Aktoren sowie deren Konfiguration und Funktionalität umfassen, sodass die Ein-/Ausgabevorrichtung auf einfache Art und Weise, zumindest teilautomatisch, vorzugsweise vollautomatisch in ein durch die Automatisierungsplattform realisiertes Steuerungssystem integriert werden kann. Wenn die Vorrichtungsinformation auf einer Ein-/Ausgabevorrichtung geeignet eingerichtet ist, kann diese als Ersatz oder Erweiterung auf einfache Art und Weise durch Koppeln integriert werden, da die Vorrichtungsinformation alle zur Einbindung erforderlichen Informationen bereitstellt. Bei einer entsprechenden Inbetriebnahme sind daher keine zusätzlichen Komponenten, beispielsweise Einrichtungswerkzeuge oder spezifische Programme, Programmänderungen oder Treiber erforderlich. Die Selbstbeschreibung kann ein einheitliches Beschreibungsformat oder Beschreibungsmodell umfassen. Beispielsweise können darin Funktionen über unterschiedliche Ein-/Ausgabevorrichtungen hinaus standardisiert beschrieben werden und generisch eingebunden und betrieben werden.

Die Vorrichtungsinformation kann beispielsweise über die Steuerungsschnittstelle abrufbar und/oder einstellbar sein. Alternativ oder zusätzlich kann die Vorrichtungsinformation über eine Konfigurationsschnittstelle der Ein-/Ausgabevorrichtung abrufbar und/oder einstellbar sein. Die Steuerungsschnittstelle kann die Konfigurationsschnittstelle umfassen, beispielsweise über einen eingebetteten Kommunikationskanal. Alternativ oder zusätzlich kann die Konfigurationsschnittstelle als separate Schnittstelle an der Ein-/Ausgabevorrichtung vorgesehen sein.

Gemäß einer Ausführungsform werden über die Konfigurationsschnittstelle Stammdaten der Ein-/Ausgabevorrichtung bereitgestellt. Die Stammdaten können Bestandteil der Vorrichtungsinformation sein.

Die Stammdaten können als eine im Wesentlichen permanente Beschreibung der Ein-/Ausgabevorrichtung angesehen werden und statische Eigenschaften der Ein-/Ausgabevorrichtung bezeichnen. Beispielsweise können die Stammdaten Meta-Informationen eines Produktions- und Konstruktionsprozesses sowie beschreibende Informationen der verbauten Hardware umfassen. Die Stammdaten können beispielsweise ein Identifikationskennzeichen, welches die Ein-/Ausgabevorrichtung eindeutig identifiziert, umfassen. Alternativ oder zusätzlich können die Stammdaten ein Typkennzeichen, welches einen Typ der Ein-/Ausgabevorrichtung anzeigt, und/oder ein Speicherkennzeichen, welches Merkmale der Speichervorrichtung der Ein-/Ausgabevorrichtung anzeigt, umfassen.

Bei einer weiteren Ausführungsform ist die Verarbeitungsvorrichtung ausgestaltet, um über die Konfigurationsschnittstelle Konfigurationsunterstützungsdaten bereitzustellen. Die Konfigurationsunterstützungsdaten können Bestandteil der Vorrichtungsinformation sein.

Bei den Konfigurationsunterstützungsdaten kann es sich beispielsweise um Konfigurationsbeschreibungen und Regeln handeln, welche während der Konfiguration zu berücksichtigen sind. Ein Konfigurationswerkzeug, welches beispielsweise in Form des oben genannte Web-Clients realisiert werden kann, verarbeitet diese Information, um, zumindest teilweise dynamisch, einen Konfigurator darzustellen.

Die Konfigurationsunterstützungsdaten umfassen beispielsweise eine Konfigurationsregel für die Vorrichtungsinformation, eine Darstellungsinformation zum Darstellen der Vorrichtungsinformation auf einer Benutzeroberfläche, eine Standardkonfiguration, welche mindestens ein Beispiel für die Vorrichtungsinformation umfasst, und/oder eine bildliche Darstellung von einer Ansicht der Ein-/Ausgabevorrichtung und/oder einer funktionalen Darstellung der Ein-/Ausgabevorrichtung.

Gemäß einer weiteren Ausführungsform der konfigurierbaren Ein-/Ausgabevorrichtung ist die Verarbeitungsvorrichtung ausgestaltet, über die Konfigurationsschnittstelle Laufzeitinformationen bereitzustellen. Die Laufzeitinformationen können Bestandteil der Vorrichtungsinformation sein.

Die Laufzeitinformationen umfassen beispielsweise Informationen zu bereitgestellten Funktionen und deren zyklischen und azyklischen Daten, Konfigurationswerte für die Konfiguration der Funktionen, und/oder Diagnoseinformationen.

Die so bereitgestellten und konfigurierten Informationen können der Ein-/Ausgabevorrichtung ermöglichen, Signale der angeschlossenen Sensoren und Aktoren in entsprechende Signale der Steuerungsschnittstelle und umgekehrt umzusetzen. Weiterhin ermöglichen die Vorrichtungsinformationen einem Anwenderprogramm in dem Steuersystem die von der Ein-/Ausgabevorrichtung bereitgestellten Funktionalitäten automatisch zu integrieren.

Weiterhin kann die Verarbeitungsvorrichtung ausgestaltet sein, auf der Grundlage der Vorrichtungsinformation automatisch die Kommunikation mit dem Steuersystem einzurichten. Die Kommunikation mit dem Steuersystem kann über einen Feldbus erfolgen. Die Steuerungsschnittstelle kann somit einen Feldbus umfassen. Ein Typ des Feldbusses kann einen Feldbustyp von mehreren unterschiedlichen vorgegebenen Feldbustypen umfassen, beispielsweise EtherCat, CanOpen oder Profinet/Profibus. Der Feldbustyp kann beispielsweise fest vorgegeben sein oder über die Konfigurationsschnittstelle bei einer Inbetriebnahme der Ein-/Ausgabevorrichtung eingestellt werden, sodass die Ein-/Ausgabevorrichtung einfach, schnell und automatisch in das Steuersystem eingebunden werden kann.

Gemäß einer Ausführungsform umfasst die konfigurierbare Ein-/Ausgabevorrichtung mindestens ein Ein-/Ausgabemodul und eine Kopfeinheit, welche mit dem mindestens einen Ein-/Ausgabemodul gekoppelt ist. Das mindestens eine Ein-/Ausgabemodul umfasst die mindestens eine Feldschnittstelle. Die Kopfeinheit umfasst die Steuerungsschnittstelle. Die Kopfeinheit ist ausgestaltet, mit mehreren verschiedenen Ein-/Ausgabemodulen gekoppelt zu werden. Beispielsweise kann die Kopfeinheit die Verarbeitungsvorrichtung und die Speichervorrichtung umfassen, beispielsweise eine Mikroprozessorsteuerung mit zugeordnetem Speicher. Die Kopfeinheit kann über eine Verbindungsstruktur, beispielsweise eine Rückwandverdrahtung, eine sogenannte Backplane, mit den mehreren Ein-/Ausgabemodulen gekoppelt werden, welche beispielsweise in entsprechende Steckplätze auf der Backplane eingesetzt werden können. Die Konfigurationsschnittstelle kann zusätzlich an der Kopfeinheit vorgesehen sein. Die verschiedenen Ein-/Ausgabemodule können spezifisch für spezielle Sensoren oder Aktoren vorgesehen sein oder generische Anschlüsse zum Anschluss von Sensoren oder Aktoren aufweisen. Dadurch kann eine Steuerung für eine Vielzahl unterschiedlicher Sensoren und Aktoren in unterschiedlich komplexen Funktionseinheiten realisiert werden und automatisch in das Steuersystem integriert werden.

Jedes Ein-/Ausgabemodul und die Kopfeinheit können jeweils ein separates Gehäuse haben. Die Rückwandverdrahtung, beispielsweise eine Busschiene, kann zusammen mit der Kopfeinheit und den Ein-/Ausgabemodulen in einem Schaltschrank eingebaut sein.

Die konfigurierbare Ein-/Ausgabevorrichtung kann alternativ eine bauliche Einheit sein. Beispielsweise können die Kopfeinheit, die Backplane und die Ein-/Ausgabemodule in einem gemeinsamen Gehäuse untergebracht sein, beispielsweise in einem Industriegehäuse mit einer für den entsprechenden Einsatzbereich im Feld geeigneten Schutzklasse. Das Gehäuse kann ferner eine gemeinsame Stromversorgung für die Kopfeinheit und die Ein-/Ausgabemodule aufweisen.

Ein weiterer Aspekt der vorliegenden Erfindung betrifft ein konfigurierbares Steuersystem zum Steuern einer Funktionalität einer Funktionseinheit einer Automatisierungsplattform gemäß einem Anwenderprogramm. Das Steuersystem umfasst eine Anwenderprogrammschnittstelle für eine Kommunikation mit dem Anwenderprogramm, eine Steuerungsschnittstelle für eine Kommunikation mit mindestens einer Ein-/Ausgabevorrichtung und eine Verarbeitungsvorrichtung. Die Ein-/Ausgabevorrichtung ist für eine Kommunikation von Signalen einer Steuerungsebene der Automatisierungsplattform ausgestaltet. Die Signale betreffen einen Sensor oder Aktor einer Feldebene der Automatisierungsplattform. Der Sensor bzw. Aktor ist der Funktionseinheit zugeordnet, um die Funktionalität der Funktionseinheit zu realisieren. Die Ein-/Ausgabevorrichtung umfasst die zuvor beschriebene konfigurierbare Ein-/Ausgabevorrichtung.

Beispielsweise kann das Steuersystem zur Kommunikation mit der Ein-/Ausgabevorrichtung über einen Feldbus ausgestaltet sein, d.h., die Steuerungsschnittstelle kann eine Feldbusschnittstelle umfassen. Die Verarbeitungsvorrichtung ist ausgestaltet, auf der Grundlage einer Vorrichtungsinformation, welche eine Zuordnung zwischen Signalen auf der Steuerungsschnittstelle und der Funktionalität der Funktionseinheit umfasst, eine Kommunikation über die Anwenderprogrammschnittstelle mit dem Anwenderprogramm in Signale auf der Steuerungsschnittstelle und umgekehrt umzusetzen. Das Steuersystem kann somit dem Anwenderprogramm eine Hardware-unabhängige Sicht auf die Funktionseinheiten bereitstellen und ermöglichten eine Steuerung der von den Sensoren und Aktoren realisierten Funktionalitäten im Wesentlichen unabhängig von der verwendeten Hardware und den verwendeten Kommunikationsprotokollen zu den Ein-/Ausgabevorrichtungen und daran angeschlossenen Sensoren und Aktoren.

Insbesondere kann beispielsweise ein Protokoll auf der Anwenderprogrammschnittstelle, mit welchem die Funktionalität der Funktionseinheit gesteuert wird, unabhängig von einem Protokoll auf der Steuerungsschnittstelle und/oder unabhängig von einem Typ des Sensors bzw. einem Typ des Aktors sein.

Gemäß einer Ausführungsform ist die Verarbeitungsvorrichtung ausgestaltet, zumindest einen Teil der Vorrichtungsinformation über die Steuerungsschnittstelle von der Ein-/Ausgabevorrichtung abzurufen. Dadurch können neue oder ersetzte Ein-/Ausgabevorrichtungen automatisch integriert und von dem Anwenderprogramm ohne zusätzlichen Änderungs- und Konfigurationsaufwand verwendet werden.

Ferner kann die Verarbeitungsvorrichtung ausgestaltet sein, auf der Grundlage der Vorrichtungsinformation automatisch die Kommunikation mit der Ein-/Ausgabevorrichtung einzurichten. Beispielsweise kann dies auf der Grundlage einer Zuordnung zwischen Anschlüssen der Ein-/Ausgabevorrichtung (Feldschnittstelle) und daran angeschlossenen Sensoren oder Aktoren sowie einer entsprechenden Zuordnung von einer Adressierung dieser Anschlüsse über die Steuerungsschnittstelle ermöglicht werden.

Bei einer weiteren Ausführungsform umfasst ein Typ des Feldbusses einen Feldbustyp von mehreren unterschiedlichen vorgegebenen Feldbustypen.

Das Steuersystem kann beispielsweise mittels eines feldbusspezifischen Mechanismus zumindest einen Teil der Vorrichtungsinformation von der Ein-/Ausgabevorrichtung abrufen. Mittels der Vorrichtungsinformation kann eine entsprechende Konfiguration der Steuerungsschnittstelle automatisch durchgeführt werden und die Ein-/Ausgabevorrichtung mit dem Steuersystem automatisch gekoppelt werden.

Gemäß einem weiteren Aspekt der vorliegenden Erfindung wird eine Automatisierungsplattform mit einer konfigurierbaren Ein-/Ausgabevorrichtung, wie sie zuvor beschrieben wurde, und einem konfigurierbaren Steuersystem, wie es zuvor beschrieben wurde, bereitgestellt. Die Automatisierungsplattform kann weitere Komponenten umfassen, beispielsweise ein oder mehrere Anwendungsprogramme, welche über die Anwenderprogrammschnittstelle mit dem Steuersystem in Verbindung stehen und somit über das Steuersystem die an die Ein-/Ausgabevorrichtung angeschlossenen Sensoren und Aktoren steuern. Die Automatisierungsplattform umfasst daher auch die zuvor beschriebenen Vorteile, insbesondere die automatische Integration von zusätzlichen oder ersetzten Ein-/Ausgabevorrichtungen mit daran angeschlossenen Sensoren und Aktoren.

### KURZE BESCHREIBUNG DER FIGUREN

Die Erfindung wird nachfolgend unter Bezugnahme auf die Zeichnungen anhand bevorzugter Ausführungsformen näher erläutert. In den Zeichnungen bezeichnen identische Bezugszeichen identische Elemente.
Fig. 1 zeigt schematisch eine Automatisierungsplattform mit mehreren konfigurierbaren Ein-/Ausgabevorrichtungen und einem konfigurierbaren Steuersystem gemäß einer Ausführungsform der vorliegenden Erfindung.
Fig. 2 zeigt schematisch eine Ein-/Ausgabevorrichtung gemäß einer Ausführungsform der vorliegenden Erfindung in Verbindung mit Sensoren und Aktoren, die einer Funktionseinheit zugeordnet sind.

### DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Figuren näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich werden.

In den Figuren dargestellte Verbindungen und Kopplungen zwischen funktionellen Einheiten und Elementen können als direkte oder indirekte Verbindungen oder Kopplungen implementiert werden. Eine Verbindung oder Kopplung kann drahtgebunden oder drahtlos implementiert sein.

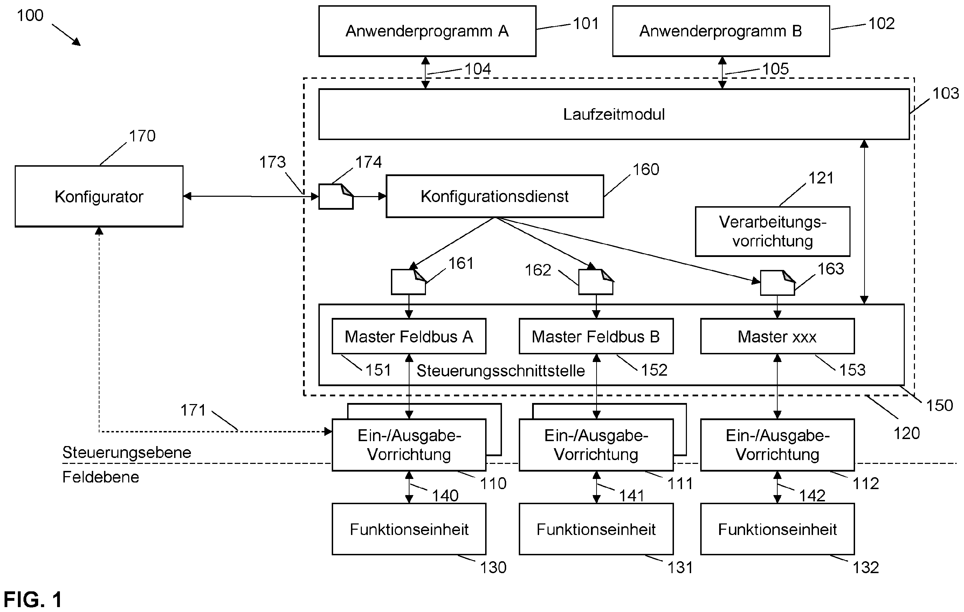

Fig. 1 zeigt schematisch ein Automatisierungssystem 100 mit zwei Anwenderprogrammen 101,102, welche über eine Automatisierungsplattform mit mehreren Funktionseinheiten 130-132 in Verbindung stehen, um Funktionalitäten dieser Funktionseinheiten 130-132 zu steuern. Die Anzahl der Anwenderprogramme kann je nach Anwendung größer oder kleiner sein. Das Steuern der Funktionseinheiten 130-132 kann beispielsweise ein Steuern von Aktoren dieser Funktionseinheiten gemäß einem geplanten Ablauf sowie ein Erfassen von Messwerten an den Funktionseinheiten umfassen, um den Ablauf in Abhängigkeit von den Messwerten zu verändern. Das Automatisierungssystem 100 kann eine Vielzahl von Funktionseinheiten 130-132 umfassen, deren Ansteuerung gegebenenfalls unter Berücksichtigung von entsprechenden Messwerten, in den Anwenderprogrammen 101,102 bestimmt wird, wie es einem Fachmann bekannt ist. Die Anwenderprogramme 101,102 können ferner Visualisierungssysteme und Benutzeroberflächen bereitstellen, um einem Benutzer des Automatisierungssystems 100 Informationen über den Zustand einzelner Funktionseinheiten 130-132 oder des gesamten Automatisierungssystems 100 bereitzustellen und steuernde Eingriffe in das Automatisierungssystem 100 zu ermöglichen. Die Funktionseinheiten 130-132 können an verschiedenen, unter Umständen auch weit entfernten Orten einer technischen Anlage angeordnet sein. Die technische Anlage kann beispielsweise eine Windkraftanlage mit mehreren verteilt angeordneten Windrädern umfassen. An jedem der Windräder können mehrere Funktionseinheiten vorgesehen sein, beispielsweise eine Funktionseinheit zur Steuerung des Generators, eine Funktionseinheit zur Steuerung einer Blattverstellung, eine Funktionseinheit zur Steuerung einer Windrichtungsnachführung und eine Funktionseinheit zur Steuerung der Stromeinspeisung in das Stromnetz. Jede der Funktionseinheiten kann ein oder mehrere Sensoren und ein oder mehrere Aktoren umfassen, welche von den Anwenderprogrammen 101,102 ausgelesen bzw. angesteuert werden. Da sich diese Funktionseinheiten über die Anlage verteilt im Feld befinden, werden sie auch als Feldfunktionseinheiten oder Feldkomponenten bezeichnet.

Bevor die Arbeitsweise der Automatisierungsplattform im Detail beschrieben wird, werden nachfolgend zunächst die Komponenten der Automatisierungsplattform sowie deren Funktionen und Beziehungen zueinander beschrieben werden.

Die Automatisierungsplattform umfasst ein oder mehrere konfigurierbare Ein-/Ausgabevorrichtungen 110-112 und mindestens ein konfigurierbares Steuersystem 120. Jede der Ein-/Ausgabevorrichtungen 110-112 ist mit einem oder mehreren Sensoren und/oder einem oder mehreren Aktoren einer entsprechend zugeordneten Funktionseinheit 130-132 gekoppelt, beispielsweise über analoge oder digitale Signalleitungen, welche zusammengefasst als Feldschnittstellen 140-142 bezeichnet werden. Eine Ein-/Ausgabevorrichtung 110-112 kann auch mehreren Funktionseinheiten 130-132 zugeordnet sein. Umgekehrt können auch mehrere Ein-/Ausgabevorrichtungen 110-112 ein und derselben Funktionseinheit 130-132 zugeordnet sein. Das Steuersystem 120 kann beispielsweise ein zentrales Steuersystem in einer Steuerzentrale für die technische Anlage sein. Das Steuersystem 120 kann beispielsweise eine Verarbeitungsvorrichtung 121 umfassen, beispielsweise einen Computer oder eine Mikroprozessorsteuerung. Das Steuersystem 120 kann weiterhin mehrere physikalische Schnittstellen aufweisen, welche nachfolgend beschrieben werden. Es ist jedoch klar, dass das Steuersystem 120 auch eine verteilte Architektur aufweisen kann, beispielsweise kann das Steuersystem 120 über mehrere Steuerzentralen hinweg verteilt arbeiten.

Die Ein-/Ausgabevorrichtungen 110-112 bilden eine Schnittstelle zwischen der Feldebene, in welcher sich die Funktionseinheiten 130-132 mit ihren Sensoren und Aktoren befinden, und einer Steuerungsebene, in welcher Informationen aus der Feldebene zusammenlaufen, verarbeitet werden und Steuersignale für die Feldebene bestimmt werden.

Eine Kommunikation zwischen den Ein-/Ausgabevorrichtungen 110-112 und dem Steuersystem 120 kann beispielsweise über Feldbusse erfolgen. Es existieren verschiedene Feldbustypen, beispielsweise EtherCat, CanOpen oder Profinet/Profibus. Für eine Kommunikation mit einer jeweiligen Ein-/Ausgabevorrichtung 110-112 kann daher als Steuerungsschnittstelle in Richtung des Steuersystems 120 einer dieser Feldbustypen vorgesehen sein. Das Steuersystem 120 stellt eine entsprechende Steuerungsschnittstelle 150 bereit, welche in der Lage ist, die verschiedenen Feldbustypen zu unterstützen. Dazu kann die Steuerungsschnittstelle 150 eine oder mehrere physikalische Schnittstellen oder Anschlüsse aufweisen. In dem in Fig. 1 gezeigten Beispiel implementiert die Steuerungsschnittstelle 150 beispielsweise einen Master 151 für einen Feldbus A, beispielsweise EtherCat, einen Master 152 für einen Feldbus B, beispielsweise Profibus, und einen Master 153 für eine sonstige Feldverbindung, beispielsweise eine kundenspezifische Verbindung 'xxx'.

Jeder der in der Steuerungsschnittstelle 150 implementierten Feldbustypen benötigt eine entsprechende Konfiguration 161-163. Ein Konfigurationsdienst 160 ist in dem Steuersystem 120 vorgesehen, welcher die physikalischen Schnittstellen gemäß der Konfiguration 161-163 als entsprechenden Master 151-153 des gewünschten Schnittstellentyps konfiguriert.

Als Schnittstelle zu den Anwenderprogrammen 101, 102 kann das Steuersystem 120 ein Laufzeitmodul 103 umfassen, welches mit der Steuerungsschnittstelle 150 gekoppelt. Das Laufzeitmodul 103 übermittelt über eine oder mehrere Anwenderprogrammschnittstellen 104, 105 Informationen zwischen der Steuerungsschnittstelle 150 und den Anwenderprogrammen 101, 102.

Der Automatisierungsplattform ist ein Konfigurator 170 zugeordnet. Der Konfigurator 170 kann über eine Konfigurationsschnittstelle 173 mit einer oder mehreren der Ein-/Ausgabevorrichtungen 110-112 indirekt kommunizieren, was durch die gestrichelte Verbindung 171 in Fig. 1 dargestellt ist. Beispielsweise kann der Konfigurator 170 über die Schnittstelle 173 auf Konfigurationsdaten 174 zugreifen und diese verändern. Der Konfigurationsdienst 160 kann auf die Vorrichtungsinformationen, welche in der Ein-/Ausgabevorrichtung 110-112 gespeichert sind, zugreifen und als Konfigurationsdaten 174 bereitstellen sowie Änderungen an den Konfigurationsdaten 174 in entsprechende Änderungen in den Vorrichtungsinformationen der Ein-/Ausgabevorrichtung 110-112 umsetzen. Der Konfigurator 170 kann beispielsweise ein Web-Client sein, welcher über die Konfigurationsschnittstelle 173 mit einem auf dem Steuersystem 120 realisierten Web-Server in Verbindung steht.

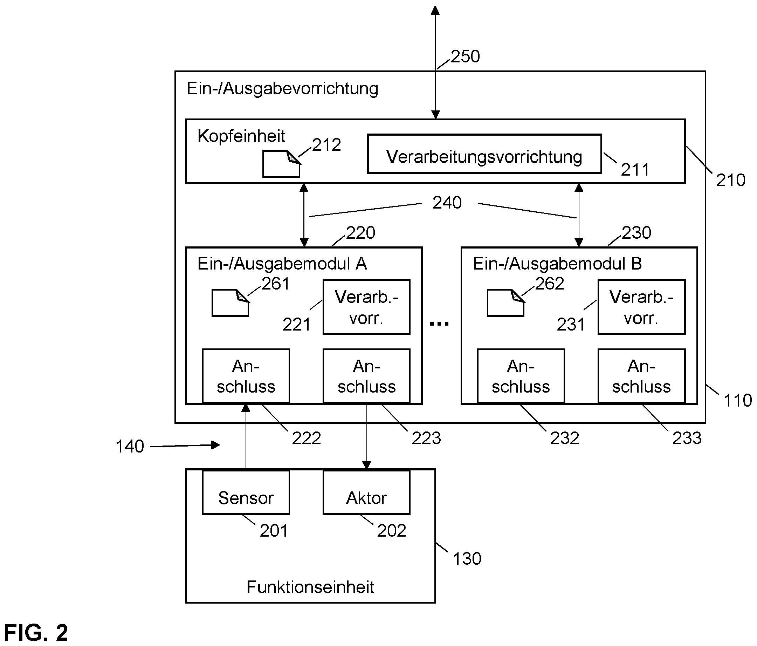

Fig. 2 zeigt Details der Ein-/Ausgabevorrichtung 110 in Verbindung mit der Funktionseinheit 130. Die nachfolgende Beschreibung der Ein-/Ausgabevorrichtung 110 trifft in vergleichbarer Art und Weise auch auf alle übrigen Ein-/Ausgabevorrichtungen zu, welche zu der Automatisierungsplattform gehören, also insbesondere auch auf die Ein-/Ausgabevorrichtungen 111 und 112.

Die beispielhafte Funktionseinheit 130 umfasst einen Sensor 201 und einen Aktor 202. Die Funktionseinheit 130 oder andere mit der Automatisierungsplattform in Verbindung stehende Funktionseinheiten können eine andere Anzahl von Sensoren 201 und Aktoren 202 aufweisen.

Die Ein-/Ausgabevorrichtung 110 umfasst eine Kopfeinheit 210 und ein oder mehrere Ein-/Ausgabemodule 220, 230. Die Kopfeinheit 210 kann eine Verarbeitungsvorrichtung 211 umfassen, beispielsweise eine Mikroprozessorsteuerung. Jedes der Ein-/Ausgabemodule 220, 230 kann eine entsprechende Verarbeitungsvorrichtung 221, 231 mit einem jeweils zugeordneten Speicher umfassen. Die Ein-/Ausgabevorrichtung 110 kann auch eine andere Architektur aufweisen

Jedes der Ein-/Ausgabemodule 220, 230 weist ein oder mehrere Anschlüsse 222, 223, 232 und 233 auf. Ein Anschluss der mehreren Anschlüsse 222, 223, 232 und 233 kann wahlweise ein Eingang, beispielsweise zum Erfassen eines Stroms oder einer Spannung, oder ein Ausgang, beispielsweise zum Ausgeben eines Stroms oder einer Spannung, sein. Ein Anschluss der mehreren Anschlüsse 222, 223, 232 und 233 kann auch wahlweise als Eingang oder Ausgang konfigurierbar sein. In dem in Figur 2 gezeigten Beispiel ist der Anschluss 222 ein Eingang zum Erfassen eines elektrischen Signals von dem Sensor 201. Der Sensor 201 kann beispielsweise ein Temperatursensor oder einem Windgeschwindigkeitssensor sein. In dem Beispiel ist der Anschluss 223 ein Ausgang zum Ausgeben eines Signals an den Aktor 202. Der Aktor 202 kann beispielsweise ein Stellmotor für eine Blattverstellung eines Windrades sein. Die Anschlüsse 222, 223, 232 und 233 können auch digitale Anschlüsse umfassen, beispielsweise Anschlüsse einer RS232 Schnittstelle.

Die Ein-/Ausgabemodule 220, 230 sind über eine Rückwandverdrahtung 240, beispielsweise mittels einer Backplane, mit der Kopfeinheit 210 verbunden. Die Kopfeinheit 210 kann für die Ein-/Ausgabemodule 220, 230 gemeinsame Funktionen erfüllen, beispielsweise eine Stromversorgung, eine Diagnosefunktion, eine Kommunikation mit dem Konfigurator 170 über die Konfigurationsschnittstelle 171 sowie eine Kommunikation über eine Steuerungsschnittstelle 250, beispielsweise einen Feldbus, mit der Steuerungsschnittstelle 150 des Steuersystems 120. Insbesondere über die Konfigurationsschnittstelle 171 und/oder über die Steuerungsschnittstelle 250 kann der Konfigurator 170 auf Vorrichtungsinformationen 261, 262 der Ein-/Ausgabevorrichtung 110 zugreifen, welche jedem Ein-/Ausgabemodul 220,230 zugeordnet sind. Beispielsweise sind die Vorrichtungsinformationen 261, 262 in einer jeweiligen den Verarbeitungsvorrichtungen 221, 231 zugeordneten Speichervorrichtung der Ein-/Ausgabemodule 120, 230 gespeichert. Alternativ oder zusätzlich kann in der Kopfeinheit 210 eine Vorrichtungsinformation 212 vorgesehen sein. Die Vorrichtungsinformation 212 kann beispielsweise Konfigurationsinformationen für die Steuerungsschnittstelle 250 und die Kopfeinheit 210 enthalten.

In der Vorrichtungsinformation 261, 262 ist eine jeweilige Selbstbeschreibung des jeweiligen Ein-/Ausgabemoduls 220, 230 gespeichert. Diese Selbstbeschreibung umfasst Informationen, welche benötigt werden, um das Ein-/Ausgabemodul 220, 230 in die Automatisierungsplattform automatisch integrieren zu können. Insbesondere ermöglicht die Selbstbeschreibung, eine Kommunikation zwischen der Ein-/Ausgabevorrichtung 110-112 und dem Steuersystem 120 sowie zwischen dem Steuersystem 120 und den Anwenderprogrammen 101,102 automatisch einzurichten.

Die Selbstbeschreibung kann beispielsweise die Hardware des Ein-/Ausgabemoduls 220, 230 selbst betreffen sowie spezielle Komponenten des Ein-/Ausgabemoduls, beispielsweise einen feldprogrammierbaren Logikbaustein (FPGA) und dessen Konfiguration. Die Selbstbeschreibung kann ferner Treiber umfassen, welche benötigt werden, um die Hardware anzusteuern. Dies kann beispielsweise eine Abbildung von Hardware-Registern auf Software, insbesondere auf generische Softwarekomponenten, sowie Regeln für Registerwerte bezüglich Wertebereichen, Datentypen oder modulspezifische Regeln betreffen. Weiterhin kann die Selbstbeschreibung unterstützende Informationen für die Konfiguration des Ein-/Ausgabemoduls umfassen, insbesondere für den Konfigurator 170. Beispielsweise kann die Selbstbeschreibung Oberflächenelemente für den Konfigurator 170 sowie Validierungsregeln umfassen, um den Benutzer über Fehlkonfigurationen zu informieren, beispielsweise in Bezug auf Wertebereiche. Ebenso können Konfigurationstexte, beispielsweise in verschiedenen Sprachen, Modulbilder und andere unterstützende Bilder bereitgestellt werden. Die Modulbilder können beispielsweise verwendet werden, um eine Abbildung zwischen den Anschlüssen 222, 223 und zugeordneten Funktionen darzustellen. Die Selbstbeschreibung kann schließlich eine Anwenderdokumentation umfassen, beispielsweise eine Funktionsbeschreibung des Ein-/Ausgabemoduls 220, 230, eine Beschreibung der Konfigurationsparameter und eine Inbetriebnahmebeschreibung.

Diese genannten Komponenten passen derart zueinander, dass ein einsatzbereites, funktionsfähiges und erweiterbares Ein-/Ausgabemodul zur Verfügung gestellt wird. Um diesen Zusammenhalt und die Kompatibilität zu unterstützen, können diese Informationen vorinstalliert auf dem Speicher des Ein-/Ausgabemoduls abgelegt sein. Somit kann das Modul automatisch integriert und unmittelbar verwendet werden.

Die Vorrichtungsinformation 261, 262 kann für jedes Ein-/Ausgabemodul 220, 230 getrennt oder für mehrere oder alle Ein-/Ausgabemodule 220, 230 einer Ein-/Ausgabevorrichtung 110 gemeinsam vorgesehen sein, beispielsweise in der Vorrichtungsinformation 212 der Kopfeinheit 210.

Im Detail kann die Vorrichtungsinformation 261, 262 folgende Komponenten umfassen: Moduldatenbeschreibung, Stammdaten und Konfigurationsunterstützungsdaten.

Die Moduldatenbeschreibung beschreibt Laufzeitinformationen des Ein-/Ausgabemoduls 220, 230. Die Moduldatenbeschreibung beinhaltet Informationen zu bereitgestellten Funktionen und deren zyklischen und azyklischen Daten. Dazu gehören Prozesswerte (zyklisch), welche für ein Prozessabbild des Moduls benötigt werden, Konfigurationswerte (azyklisch), die für die Konfiguration der Funktionen benötigt werden, Diagnoseinformationen (zyklisch u. azyklisch), um Fehlverhalten feststellen zu können, und Servicedaten (azyklisch), welche weitere Informationen zu einem Modul liefern (Identifikation, Version, usw.). Das zentrale Konzept der Laufzeitinformationen ist ein Datenpunkt (ein sogenannter DataPoint) als kleinste adressierbare Informationseinheit eines Ein-/Ausgabemoduls 220, 230. Hier kann auch eine Abstraktion zwischen einer physikalischen Adresse auf dem Ein-/Ausgabemodul 220, 230 (beispielsweise in einem FPGA) und der Steuerungsschnittstelle 250 nach außen bereitgestellt werden, d.h. eine Umsetzung zwischen den Signalen auf der Feldschnittstelle 140 und entsprechenden Signalen auf der Steuerungsschnittstelle 250 erfolgt in der Verarbeitungsvorrichtung 221, 231 des Ein-/Ausgabemoduls. Eine zusätzliche Verarbeitung kann auf der Verarbeitungsvorrichtung 211 der Kopfeinheit 210 für die Umsetzung auf die Steuerungsschnittstelle 250 durchgeführt werden. Die Laufzeitinformation kann von einem generischen Treiber verwendet werden, um dynamisch die Struktur eines Ein-/Ausgabemoduls 220, 230 erkennen zu können. Jede Moduldatenbeschreibung folgt einem bestimmen vorgegebenen Modell und Format, um eine Durchgängigkeit und eine generische Verarbeitung zu unterstützen.

Die Stammdaten beschreiben statische Produkteigenschaften der Ein-/Ausgabevorrichtung 110 bzw. der Ein-/Ausgabemodule 220, 230, die verwendet werden können, um eine Ein-/Ausgabevorrichtung 110 oder ein Ein-/Ausgabemodul 220, 230 eindeutig zu identifizieren. Hierbei handelt es sich um Meta-Informationen des Produktions- und Konstruktionsprozesses sowie beschreibende Informationen der verbauten Hardware. Die Stammdaten können beispielsweise eine Modulidentifikation, Produktionsinformationen und Speicherinformationen abdecken. Zur Modulidentifikation können Informationen wie Name, Typ, Variante etc. gehören, welche das Modul eindeutig identifizieren Die Produktionsinformationen betreffen beispielsweise Produktionsdaten wie Seriennummer, Artikelnummer, Produktionsdatum, Produktions-Test-Status etc. und ermöglichen eine lückenlose Nachverfolgung von jeder einzelnen Vorrichtung oder jedem einzelnen Modul. Die Speicherinformationen können die verbauten Speicherbausteine beschreiben, um eine allgemeingültige Schnittstelle zum Einschreiben und Auslesen der Vorrichtungsinformation zu gewährleisten.

Die Konfigurationsunterstützungsdaten beinhalten Informationen, die beim Einrichten der Ein-Ausgabevorrichtung 110, beispielsweise bei oder vor einer Installation, verwendet werden können, beispielsweise von dem Konfigurator 170. Die Konfigurationsunterstützungsdaten können Konfigurationsbeschreibungen und Konfigurationsregeln umfassen, welche während der Konfiguration zu berücksichtigen sind. Diese Daten können verarbeitet werden, um eine Benutzeroberfläche im Konfigurator 170 zumindest in großen Teilen automatisiert und dynamisch darzustellen zu können. Die Konfigurationsunterstützungsdaten können ferner Darstellungsinformationen, Code für spezielle Elemente der Benutzeroberfläche, Standardkonfigurationen für gängige Anwendungsfälle einer Ein-/Ausgabevorrichtung oder eines Ein-/Ausgabemoduls, veranschaulichende Abbildungen einer Ein-/Ausgabevorrichtung oder eines Ein-/Ausgabemoduls, Inbetriebnahmeinformationen und Übersetzungen für verschiedene unterstützte Sprachen betreffen.

Die Konfigurationsregeln beschreiben beispielsweise, welche Funktionen parallel verwendet werden können, und zulässige Wertebereiche. Die Darstellungsinformationen können Layoutinformationen und Gruppierungen von zusammengehörigen Werten anzeigen, um zu beschreiben, wie die einzelnen Werte dargestellt und editiert werden können, beispielsweise über Checkboxen, Dropdown- oder Pulldown-Menüs, Radio-Buttons, usw. Der Code für spezielle Elemente der Benutzeroberfläche kann für spezifische Ein-/Ausgabevorrichtungen oder Ein-/Ausgabemodule bereitgestellt werden, die nicht Teil eines generischen Konfigurators sind. Die Inbetriebnahmeinformationen umfassen beispielsweise Anschlussbelegungen durch Funktionen oder Anschlussbilder für Sensoren und Aktuatoren.

Anders ausgedrückt umfasst die Vorrichtungsinformation Informationen für eine Zuordnung zwischen den Signalen auf den Feldschnittstellen 140-142 und entsprechenden Signalen auf der Steuerungsschnittstelle 150, 250 sowie eine Zuordnung zwischen den Signalen auf der Steuerungsschnittstelle 150, 250 und einer Funktionalität der Funktionseinheiten 130-132. In den Ein-Ausgabevorrichtungen 110-112 setzen die jeweiligen Verarbeitungsvorrichtungen 211, 221, 231 auf der Grundlage der Vorrichtungsinformation die Hardwarespezifischen Signale auf der Feldschnittstelle 140-142 in Hardware-unabhängige Feldbus-spezifische Signale auf der Steuerungsschnittstelle 150, 250 und umgekehrt um. In dem Steuersystem 120 setzt die Verarbeitungsvorrichtung 121 auf der Grundlage der Vorrichtungsinformation die Hardware-unabhängigen Feldbusspezifischen Signale auf der Steuerungsschnittstelle 150, 250 in eine Kommunikation über die Anwenderprogrammschnittstellen 104, 105 mit den Anwenderprogrammen 101, 102 um und umgekehrt. Die Kommunikation über die Anwenderprogrammschnittstellen 104, 105 mit den Anwenderprogrammen 101, 102 ist funktional und unabhängig von dem verwendeten Feldbus und der Hardware der Ein-/Ausgabevorrichtungen 110-112 und der verwendeten Sensoren und Aktoren.

Mittels der Vorrichtungsinformation kann eine automatisierte Integration der Ein-/Ausgabevorrichtung 110 in das Steuersystem 120 und eine automatisierte Anbindung an die Anwenderprogramme 101, 102 ermöglicht werden. Beispielsweise kann dadurch eine Erstellung von spezifischen Treibern für die Ein-/Ausgabevorrichtungen vermieden werden. Somit kann der Implementierungsaufwand reduziert werden. Durch eine deklarative Beschreibung lässt sich die Softwareintegration auf generische Art und Weise lösen. Zudem kommt es zu einer Entkopplung der spezifischen Implementierung der Hardware. Die Hardware kann ihre interne Implementierung anpassen, solange sich die beschriebene Steuerungsschnittstelle nicht ändert. Die Steuerungsschnittstelle ist so gestaltet, dass interne Hardwareadressen nicht Teil der Schnittstellenbeschreibung sind, um die automatisierte Integration zu erreichen.

Unter Bezugnahme auf die Figuren wird nachfolgend der Betrieb des Automatisierungssystems 100 unter Verwendung der Vorrichtungsinformationen der Ein-/Ausgabevorrichtungen 110-112 beschrieben werden.

Die Ein-/Ausgabevorrichtungen 110-112 können im Betrieb Signale von angeschlossenen Sensoren 201 empfangen und Signale an angeschlossene Aktoren 202 ausgeben. Beispielsweise kann über die Steuerungsschnittstelle 250, die beispielsweise ein Feldbus ist, eine Anforderung zum Auslesen eines Sensors oder eine Anforderung zum Ansteuern eines Aktors empfangen werden.

Auf dem Feldbus kann dem Sensor bzw. Aktor eine bestimmte Adressierung oder ein bestimmtes Datenobjekt zugeordnet sein. Zum Beispiel kann der Feldbus ein signalorientiertes Datenmodell verwenden. Jedes Telegramm auf dem Feldbus repräsentiert einen oder mehrere Datenpunkte, wie z. B. einen Messwert, einen Sollwert, ein Kommando oder einen Alarm. Dabei kann dieses Telegramm über eine Adresse definiert werden.

An der Ein-/Ausgabevorrichtung 110 ist der Sensor 201 bzw. Aktor 202 an einem bestimmten Anschuss (Pin) 222, 223 angeschlossen. Mittels einer elektronischen Komponente, beispielsweise einem FPGA, auf der Ein-/Ausgabevorrichtung 110 kann ein Signal von dem Sensor 201 in einen digitalen Messwert (Datenpunkt) umgewandelt werden, der über den Feldbus kommuniziert wird. Ebenso kann mittels einer bestimmten elektronischen Komponente, beispielsweise einem FPGA, auf der Ein-/Ausgabevorrichtung 110 ein digitaler Einstellwert, der über den Feldbus kommuniziert wird, in ein Steuersignal (Datenpunkt) für den Aktor 202 umgewandelt werden. Eine Zuordnung zwischen den Sensor/Aktor-Signalen und entsprechenden Datenpunkten auf dem Feldbus, beispielsweise eine Adressierung oder ein Datenobjekt, sowie die verwendeten Anschlüsse 222, 223 und elektronischen Komponenten sind über die Vorrichtungsinformation verfügbar und werden von der Verarbeitungsvorrichtung 211, 221, 231 bei der Umsetzung verwendet. Ferner kann die Vorrichtungsinformation eine Semantik des Datenpunkts beschreiben.

In dem Steuersystem 120 stellt die Steuerungsschnittstelle 150 unter Verwendung der Vorrichtungsinformation über die verschiedenen Feldbusse eine Kommunikation mit den Ein-/Ausgabevorrichtungen 110-112 her. Parameter für eine geeignete Ansteuerung der verschiedenen Feldbusse können aus der Vorrichtungsinformation ermittelt werden. Die Parameter betreffen beispielsweise eine Adressierung der Ein-/Ausgabevorrichtungen 110-112 und eine Adressierung von zu übertragenden Datenpunkten auf dem jeweiligen Feldbus.

Durch einen Zugriff des Laufzeitmoduls 103 auf die Vorrichtungsinformationen der Ein-/Ausgabevorrichtungen 110-112 kann das Laufzeitmodul 103 bestimmen, welche Funktionen die Ein-/Ausgabevorrichtungen 110-112 zur Verfügung stellen und wie diese zu verwenden sind. Beispielsweise kann das Laufzeitmodul 103 Messwerte von den Ein-/Ausgabevorrichtungen 110-112 im Betrieb über die Steuerungsschnittstelle 150 abrufen und interpretieren und den Anwenderprogrammen 101, 102 zur Verfügung stellen, beispielsweise in Form von Datenstrukturen oder Datentypen. Umgekehrt kann das Laufzeitmodul 103 Einstellwerte von den Anwenderprogrammen 101, 102, beispielsweise in Form von Datenstrukturen oder Datentypen, in entsprechende Werte für die Ein-/Ausgabevorrichtungen 110-112 im Betrieb umsetzen und über die Steuerungsschnittstelle 150 ausgeben. Die Messwerte und Einstellwerte können dabei funktional definiert sein, also unabhängig von einer konkreten Adressierung für eine bestimmte Ein-Ausgabevorrichtung und unabhängig von einem bestimmten Sensortyp oder Aktortyp.

Beispielsweise können die Anwenderprogramme 101, 102 mit Hilfe einer IEC61131-3-Programmiersprache erstellt werden. Das Steuersystem 120 bildet in diesem Fall unter Verwendung der Vorrichtungsinformationen der Ein-/Ausgabevorrichtungen 110-112 die Datenpunkte der Ein-/Ausgabevorrichtungen 110-112 auf Adressierungen, Prozessabbildungen und Datentypen der IEC61131-3 Programmierung ab.

Beispielsweise kann die Funktionseinheit 130 eine Komponente eines Windrades sein. Ein Sensor der Funktionseinheit 130 erfasst eine Windgeschwindigkeit im Bereich des Windrades. Dem Windrad ist eine Adresse oder ein anderes eindeutiges Identifikationsmerkmal zugeordnet. Das Anwenderprogramm 101 fragt beispielsweise die Windgeschwindigkeit bei dem Windrad ab. Dazu übermittelt das Anwenderprogramm 101 über die Anwenderprogrammschnittstelle 104 eine Anforderung an das Laufzeitmodul 103 mit einer in dem Anwenderprogramm 101 verwendeten Adressierung des Windrades und Abbildung oder Datenstruktur für die Windgeschwindigkeit. Das Laufzeitmodul 103 setzt in Verbindung mit der Steuerungsschnittstelle 150 diese Anforderung in ein oder mehrere entsprechende Feldbus-Telegramme für die Ein-/Ausgabevorrichtung 110 um. Die Umsetzung erfolgt im Betrieb wie zuvor beschrieben gemäß der Vorrichtungsinformation. Die Ein-/Ausgabevorrichtung 110 empfängt die Feldbus-Telegramme. Wie durch die Vorrichtungsinformation vorgegeben, wird ein Signal an dem mit dem Sensor verbundenen Anschluss ausgelesen und ein Antworttelegramm, welches den Sensorwert enthält, erzeugt und über den Feldbus zu dem Steuersystem 120 übertragen. In dem Steuersystem 120 erzeugen die Steuerungsschnittstelle 150 und das Laufzeitmodul 103 eine Antwort auf die Anforderung des Anwenderprogramms 101.

Das Bereitstellen der Vorrichtungsinformation und die Konfiguration des Steuersystems 120 und der Ein-/Ausgabevorrichtungen 110-112 anhand der Vorrichtungsinformation kann im Detail folgendermaßen durchgeführt werden.

Der Konfigurator 170 wird verwendet, um eine generische feldbusunabhängige Konfiguration zu erstellen. Diese Konfiguration kann über ein generisches Konfigurationsmodell beschrieben werden, welches die Elemente der Moduldatenbeschreibung um Konfigurationswerte erweitert. Der Konfigurator 170 greift dazu auf die Vorrichtungsinformationen der Ein-/Ausgabevorrichtungen 110-112 und auf Konfigurationsdaten 174 des Steuersystems 120 zu und kann diese verändern. Dies kann durch Eingaben von einem Benutzer über eine Benutzeroberfläche und darauf basierend zumindest teilweise automatisiert erfolgen. Für den Aufbau der Benutzeroberfläche verwendet der Konfigurator 170, wie bereits beschrieben, die in den Vorrichtungsinformationen abgelegten Konfigurationsunterstützungsdaten.

Der Konfigurationsdienst 160 liest die Konfigurationsdaten 174 und generiert die für den jeweiligen Feldbus spezifische Konfiguration 161-163. In jedem der Master 151-153 kann beispielsweise für jeden Feldbustyp ein Konverter vorgesehen sein, welcher das Format des entsprechenden Feldbusses unterstützt. In der generierten Konfiguration 161-163 werden Informationen bereitgestellt, wie die Daten auf der Steuerungsschnittstelle 150 zu den Ein-/Ausgabevorrichtungen 110-112 zu erzeugen und zu interpretieren sind. Die Konfigurationen 161-163 umfasst insbesondere Feldbus-spezifische Mittel, zum Beispiel ein Adressierungsschema, welche aus der Vorrichtungsinformation generiert werden.

Der jeweilige Master 151-153 liest die Konfiguration 161-163 für den Feldbus ein und initialisiert beispielsweise einen Feldbus-spezifischen Protokollstapel und baut eine Kommunikation mit den über den Feldbus angeschlossenen Ein-/Ausgabevorrichtungen 110-112 auf. Ferner kann der Master 151-153 die über den Feldbus angeschlossenen Ein-/Ausgabevorrichtungen 110-112 initialisieren und zumindest teilweise konfigurieren, beispielsweise eine Konfiguration von Protokollparametern. Sobald die Kommunikation zwischen dem jeweiligen Master 151-153 und den Ein-/Ausgabevorrichtungen 110-112 aufgebaut ist, kann der Master 151-153 weitere Konfigurationen an den Ein-/Ausgabevorrichtungen auch im Betrieb durchführen. Beispielsweise können Konfigurationen von dem Konfigurator 170 und dem Konfigurationsdienst 160 über den jeweiligen Feldbus auf den Ein-/Ausgabevorrichtungen 110-112 durchgeführt werden.

Auf den Ein-/Ausgabevorrichtungen 110-112 befinden sich feldbusspezifische Gegenstücke zu dem jeweiligen Master 151-153. Wie in Fig. 2 gezeigt, kann jede Ein-/Ausgabevorrichtung 110-112 eine entsprechende Kopfeinheit 210 umfassen. Die Kopfeinheit 210 kann dem zugeordneten Master 151-153 einen Zugriff auf die Vorrichtungsinformationen 261, 262 ermöglichen, um beispielsweise Änderungen von dem Konfigurator 170 über das Steuersystem 120 zu ermöglichen.

Die Kopfeinheit 210 empfängt Telegramme über den Feldbus und verarbeitet diese Telegramme gemäß der Zuordnung in der Vorrichtungsinformation 261, 262. Beispielsweise veranlasst die Verarbeitungsvorrichtung 211 gegebenenfalls in Verbindung mit den Verarbeitungsvorrichtungen 221, 231, dass Parameter gemäß der Zuordnung der Vorrichtungsinformation 261, 262 in entsprechende Register eines Ein-/Ausgabemoduls 220, 230 geschrieben werden oder aus entsprechenden Registern ausgelesen werden. Anders ausgedrückt kann die Verarbeitungsvorrichtung 211 der Kopfeinheit 210 in Verbindung mit den Verarbeitungsvorrichtungen 221, 231 anhand der Vorrichtungsinformationen 261, 262 bestimmen, welche Datenpunkte auf welchem Ein-/Ausgabemodul 220, 230 zu setzen oder auszulesen sind.

Durch die Konfigurierbarkeit der Ein-/Ausgabevorrichtungen ist eine rasche und kosteneffiziente Realisierung von Automatisierungssystemen möglich. Beispielsweise kann ein Bereitstellen und Installieren von speziellen Softwarekomponenten, z.B. Treibern, vermieden werden. Die Ein-/Ausgabemodule sind durch die Vorrichtungsinformation selbstbeschreibend und lassen sich ohne Zusatzinformationen aus externen Quellen (Kataloge, Webseiten, Treibern) verwenden. Die Abhängigkeiten von einem externen Treiber, welcher im System bereitzustellen ist, wird dadurch vermieden und ein Aufwand, eine Ein-/Ausgabevorrichtung zu integrieren, kann verringert werden. Durch die Unterstützung von am Markt etablierten Feldbussen, kann vorhandene Infrastruktur verwendet werden und auf marktübliche Komponenten zurückgegriffen werden. Durch die Feldbus-unabhängige und Hardware-unabhängige Anbindung an die Anwenderprogramme, kann eine hohe Kompatibilität erreicht werden und Hardwarespezifische oder Feldbus-spezifische Änderungen und Anpassungen in den Anwenderprogrammen vermieden werden, insbesondere bei Erweiterungen des Automatisierungssystems oder den Ersatz von Komponenten durch neuere oder modernere Komponenten. Ferner können moderne Entwicklungsumgebungen für die Entwicklung der Anwenderprogramme verwendet werden, wodurch unter anderem die Wartung und Versionsverwaltung der Anwenderprogramme vereinfacht werden kann.

## Patentansprüche

1. Konfigurierbare Ein-/Ausgabevorrichtung für eine Automatisierungsplattform, wobei die Ein-/Ausgabevorrichtung (110-112) als Kommunikationsschnittstelle zwischen einer Feldebene und einer Steuerungsebene der Automatisierungsplattform (100) ausgestaltet ist und umfasst:
- mindestens eine Feldschnittstelle (140-142), wobei jede der mindestens einen Feldschnittstelle (140-142) für eine Kommunikation von Signalen mit einem Sensor (201) oder Aktor (202) der Feldebene ausgestaltet ist, wobei der Sensor (201) bzw. Aktor (202) einer Funktionseinheit (130-132) zugeordnet ist, um eine Funktionalität der Funktionseinheit (130-132) zu realisieren,
- eine Steuerungsschnittstelle (250), wobei die Steuerungsschnittstelle (250) für eine Kommunikation mit einem Steuersystem (120) der Steuerungsebene ausgestaltet ist,
- eine Speichervorrichtung zum Speichern einer Vorrichtungsinformation (212, 261, 262), wobei die Vorrichtungsinformation (212, 261, 262) eine Zuordnung zwischen den Signalen auf der mindestens einen Feldschnittstelle (140-142) und entsprechenden Signalen auf der Steuerungsschnittstelle (250) sowie eine Zuordnung zwischen den Signalen auf der Steuerungsschnittstelle (250) und der Funktionalität der Funktionseinheit (130-132) umfasst, und
- eine Verarbeitungsvorrichtung (211, 221, 231), die ausgestaltet ist, auf der Grundlage der Vorrichtungsinformation (212, 261, 262) die Signale auf der mindestens einen Feldschnittstelle (140-142) in Signale auf der Steuerungsschnittstelle (250) und umgekehrt umzusetzen,
wobei die Vorrichtungsinformation (212, 261, 262) über eine Konfigurationsschnittstelle (171) der Ein-/Ausgabevorrichtung (110-112) veränderlich ist, wobei die Konfigurationsschnittstelle eine separate Schnittstelle ist oder mit der Steuerungsschnittstelle (250) integriert ausgebildet ist,
**dadurch gekennzeichnet, dass** die Verarbeitungsvorrichtung (211, 221, 231) ferner ausgestaltet ist, über die Konfigurationsschnittstelle (171) Laufzeitinformationen bereitzustellen,
wobei die Laufzeitinformationen mindestens eine der folgenden Informationen umfassen:
- Informationen zu bereitgestellten Funktionen und deren zyklischen und azyklischen Daten, und
- Diagnoseinformationen.

2. Konfigurierbare Ein-/Ausgabevorrichtung nach Anspruch 1, wobei die Verarbeitungsvorrichtung (211, 221, 231) ferner ausgestaltet ist, über die Konfigurationsschnittstelle (171) Stammdaten der Ein-/Ausgabevorrichtung (110-112) bereitzustellen, wobei die Stammdaten mindestens eines der folgenden Kennzeichen umfassen:
- ein Identifikationskennzeichen, welches die Ein-/Ausgabevorrichtung (110-112) eindeutig identifiziert;
- ein Typkennzeichen, welches einen Typ der Ein-/Ausgabevorrichtung (110-112) anzeigt; und
- ein Speicherkennzeichen, welches Merkmale der Speichervorrichtung der Ein-/Ausgabevorrichtung (110-112) anzeigt.

3. Konfigurierbare Ein-/Ausgabevorrichtung nach Anspruch 1 oder Anspruch 2,
wobei die Verarbeitungsvorrichtung (211, 221, 231) ferner ausgestaltet ist, über die Konfigurationsschnittstelle (171) Konfigurationsunterstützungsdaten bereitzustellen,
wobei die Konfigurationsunterstützungsdaten mindestens eine der folgenden Informationen umfassen:
- eine Konfigurationsregel für die Vorrichtungsinformation (212, 261, 262);
- eine Darstellungsinformation zum Darstellen der Vorrichtungsinformation (212, 261, 262) auf einer Benutzeroberfläche;
- eine Standardkonfiguration, welche mindestens ein Beispiel für die Vorrichtungsinformation (212, 261, 262) umfasst; und
- eine bildliche Darstellung von einer Ansicht der Ein-/Ausgabevorrichtung (110-112) und/oder einer funktionalen Darstellung der Ein-/Ausgabevorrichtung (110-112).

4. Konfigurierbare Ein-/Ausgabevorrichtung nach einem der Ansprüche 1-3, wobei die Laufzeitinformationen ferner Konfigurationswerte für die Konfiguration der Funktionen umfassen.

5. Konfigurierbare Ein-/Ausgabevorrichtung nach einem der vorhergehenden Ansprüche, wobei die Verarbeitungsvorrichtung (211, 221, 231) ferner ausgestaltet ist, auf der Grundlage der Vorrichtungsinformation (212, 261, 262) automatisch die Kommunikation mit dem Steuersystem (120) einzurichten.

6. Konfigurierbare Ein-/Ausgabevorrichtung nach Anspruch 5, wobei die Kommunikation mit dem Steuersystem (120) über einen Feldbus erfolgt, wobei ein Typ des Feldbusses einen Feldbustyp von mehreren unterschiedlichen vorgegebenen Feldbustypen umfasst.

7. Konfigurierbare Ein-/Ausgabevorrichtung nach einem der vorhergehenden Ansprüche, wobei die Feldschnittstelle (140-142) mindestens einen elektrischen Anschluss (222, 223, 232, 233) umfasst, über den die Signale als zugeordnete Strom- oder Spannungsgrößen übertragen werden.

8. Konfigurierbare Ein-/Ausgabevorrichtung nach einem der vorhergehenden Ansprüche, wobei die Ein-/Ausgabevorrichtung (110-112) ferner mindestens ein Ein-/Ausgabemodul (220, 230) und eine Kopfeinheit (210), welche mit dem mindestens einen Ein-/Ausgabemodul (220, 230) gekoppelt ist, umfasst, wobei das mindestens eine Ein-/Ausgabemodul (220, 230) die mindestens eine Feldschnittstelle (140-142) umfasst und wobei die Kopfeinheit (210) die Steuerungsschnittstelle (250) umfasst, und wobei die Kopfeinheit (210) ausgestaltet ist, mit mehreren verschiedenen Ein-/Ausgabemodulen (220, 230) gekoppelt zu werden.

9. Konfigurierbares Steuersystem eingerichtet zum Steuern einer Funktionalität einer Funktionseinheit einer Automatisierungsplattform gemäß einem Anwenderprogramm, wobei das Steuersystem (120) umfasst:
- eine Anwenderprogrammschnittstelle (104, 105) eingerichtet zur Kommunikation mit dem Anwenderprogramm (101, 102),
- eine Steuerungsschnittstelle (150) eingerichtet zur Kommunikation mit mindestens einer Ein-/Ausgabevorrichtung (110-112) nach einem der Ansprüche 1-8, wobei die Ein-/Ausgabevorrichtung (110-112) für eine Kommunikation von Signalen einer Steuerungsebene der Automatisierungsplattform (100) ausgestaltet ist, wobei die Signale einen Sensor (201) oder Aktor (202) einer Feldebene der Automatisierungsplattform (100) betreffen, wobei der Sensor (201) bzw. Aktor (202) der Funktionseinheit (130-132) zugeordnet ist, um die Funktionalität der Funktionseinheit (130-132) zu realisieren, und
- eine Verarbeitungsvorrichtung (121), welche ausgestaltet ist, auf der Grundlage einer Vorrichtungsinformation (212, 261, 262), welche eine Zuordnung zwischen Signalen auf der Steuerungsschnittstelle (150) und der Funktionalität der Funktionseinheit (130-132) umfasst, eine Kommunikation über die Anwenderprogrammschnittstelle (104, 105) mit dem Anwenderprogramm (101. 102) in Signale auf der Steuerungsschnittstelle (150) und umgekehrt umzusetzen.

10. Konfigurierbares Steuersystem nach Anspruch 9, wobei die Verarbeitungsvorrichtung (121) ferner ausgestaltet ist zumindest einen Teil der Vorrichtungsinformation (212, 261, 262) über die Steuerungsschnittstelle (150) von der Ein-/Ausgabevorrichtung (110-112) abzurufen, und/oder auf der Grundlage der Vorrichtungsinformation (212, 261, 262) automatisch die Kommunikation mit der Ein-/Ausgabevorrichtung (110-112) einzurichten.

11. Konfigurierbares Steuersystem nach einem der Anspruch 9 oder Anspruch 10,
wobei das Steuersystem (120) zur Kommunikation mit der Ein-/Ausgabevorrichtung (110-112) über einen Feldbus ausgestaltet ist,
wobei ein Typ des Feldbusses einen Feldbustyp von mehreren unterschiedlichen vorgegebenen Feldbustypen umfasst, wobei die Verarbeitungsvorrichtung (121) ferner ausgestaltet ist, auf der Grundlage der Vorrichtungsinformation (212, 261, 262) automatisch einen für die Steuerungsschnittstelle (150) zu verwendenden Feldbustyp der mehreren vorgegebenen Feldbustypen einzurichten.

12. Konfigurierbares Steuersystem nach einem der Ansprüche 9-11, wobei
ein Protokoll auf der Anwenderprogrammschnittstelle (104, 105), mit welchem die Funktionalität der Funktionseinheit (13-132) gesteuert wird, unabhängig von einem Protokoll auf der Steuerungsschnittstelle (150) ist und/oder unabhängig von einem Typ des Sensors (201) bzw. einem Typ des Aktors (202) ist.

13. Automatisierungsplattform mit einer konfigurierbaren Ein-/Ausgabevorrichtung (110-112) nach einem der Ansprüche 1-8 und/oder einem konfigurierbaren Steuersystem (120) nach einem der Ansprüche 9-12.

## Claims

1. Configurable input/output device for an automation platform, wherein the input/output device (110-112) is designed as a communication interface between a field level and a control level of the automation platform (100) and comprises:
- at least one field interface (140-142), wherein each of the at least one field interface (140-142) is designed for a communication of signals with a sensor (201) or actuator (202) of the field level, wherein the sensor (201) or actuator (202) is associated with a functional unit (130-132) in order to implement a functionality of the functional unit (130-132),
- a control interface (250), wherein the control interface (250) is designed for a communication with a control system (120) of the control level,
- a memory device for storing device information (212, 261, 262), wherein the device information (212, 261, 262) comprises an association between the signals on the at least one field interface (140-142) and corresponding signals on the control interface (250) and an association between the signals on the control interface (250) and the functionality of the functional unit (130-132), and
- a processing device (211, 221, 231) designed to convert the signals on the at least one field interface (140-142) into signals on the control interface (250) and vice versa on the basis of the device information (212, 261, 262),
wherein the device information (212, 261, 262) is variable via a configuration interface (171) of the input/output device (110-112), wherein the configuration interface is a separate interface or is integrated with the control interface (250),
**characterized in that** the processing device (211, 221, 231) is further designed to provide runtime information via the configuration interface (171), wherein the runtime information comprises at least one of the following information:
- information on provided functions and their cyclic and acyclic data, and
- diagnostic information.

2. Configurable input/output device according to claim 1, wherein the processing device (211, 221, 231) is further designed to provide master data of the input/output device (110-112) via the configuration interface (171),
wherein the master data comprises at least one of the following features:
- an identification mark uniquely identifying the input/output device (110-112);
- a type identifier indicating a type of the input/output device (110- 112); and
- a memory identifier indicating features of the memory device of the input/output device (110-112).

3. Configurable input/output device according to claim 1 or claim 2,
wherein the processing device (211, 221, 231) is further designed to provide configuration support data via the configuration interface (171), the configuration support data comprising at least one of the following information:
- a configuration rule for the device information (212, 261, 262);
- representation information for representing the device information (212, 261, 262) on a user interface;
- a standard configuration comprising at least one example of the device information (212, 261, 262); and
- a pictorial representation of a view of the input/output device (110-112) and/or a functional representation of the input/output device (110-112).

4. Configurable input/output device according to one of claims 1-3,
wherein the runtime information further comprises configuration values for configuring the functions.

5. Configurable input/output device according to one of the preceding claims, wherein the processing device (211, 221, 231) is further designed to automatically establish communication with the control system (120) based on the device information (212, 261, 262).

6. Configurable input/output device according to claim 5, wherein the communication with the control system (120) takes place via a fieldbus, wherein one type of the fieldbus comprises one fieldbus type of a plurality of different predetermined fieldbus types.

7. Configurable input/output device according to one of the preceding claims, wherein the field interface (140-142) comprises at least one electrical terminal (222, 223, 232, 233) via which the signals are transmitted as associated current or voltage quantities.

8. Configurable input/output device according to one of the preceding claims, wherein the input/output device (110-112) further comprises at least one input/output module (220, 230) and a head unit (210) coupled to the at least one input/output module (220, 230), wherein the at least one input/output module (220, 230) comprises the at least one field interface (140-142), and wherein the head unit (210) comprises the control interface (250), and wherein the head unit (210) is designed to be coupled to a plurality of different input/output modules (220, 230).

9. Configurable control system configured to control a functionality of a functional unit of an automation platform according to a user program, the control system (120) comprising:
- a user program interface (104, 105) set up for communication with the user program (101, 102),
- a control interface (150) set up for communication with at least one input/output device (110-112) according to one of claims 1-8, wherein the input/output device (110-112) is designed for a communication of signals of a control level of the automation platform (100), wherein the signals relate to a sensor (201) or actuator (202) of a field level of the automation platform (100), wherein the sensor (201) or actuator (202) is associated with the functional unit (130-132) in order to implement the functionality of the functional unit (130-132), and
- a processing device (121) designed to transform based on device information (212, 261, 262) comprising an association between signals on the control interface (150) and the functionality of the functional unit (130-132) a communication via the user program (104, 105) with the user program (101. 102) into signals on the control interface (150) and vice versa.

10. Configurable control system according to claim 9, wherein the processing device (121) is further designed to retrieve at least a portion of the device information (212, 261, 262) from the input/output device (110-112) via the control interface (150), and/or
automatically establish communication with the input/output device (110-112) based on the device information (212, 261, 262).

11. Configurable control system according to one of claims 9 or 10, wherein the control system (120) is designed for communication with the input/output device (110-112) via a fieldbus,
wherein a type of the fieldbus comprises a fieldbus type of a plurality of different predetermined fieldbus types, wherein the processing device (121) is further designed to automatically establish based on the device information (212, 261, 262) a fieldbus type of the plurality of predetermined fieldbus types to be used for the control interface (150).

12. Configurable control system according to one of claims 9-11, wherein a protocol on the user program interface (104, 105) with which the functionality of the functional unit (13-132) is controlled, is independent of a protocol on the control interface (150) and/or is independent of a type of the sensor (201) or a type of the actuator (202), respectively.

13. Automation platform comprising a configurable input/output device (110-112) according to one of claims 1-8 and/or a configurable control system (120) according to one of claims 9-12.

## Revendications

1. Dispositif d'entrée/sortie configurable pour une plateforme d'automatisation, dans lequel le dispositif d'entrée/sortie (110-112) est conçu en tant qu'interface de communication entre un plan de terrain et un plan de commande de la plateforme d'automatisation (100) et comprend :
- au moins une interface de terrain (140-142), dans lequel chacune de l'au moins une interface de terrain (140-142) est conçue pour une communication de signaux avec un capteur (201) ou un actionneur (202) du plan de terrain, dans lequel le capteur (201) ou l'actionneur (202) est associé à une unité fonctionnelle (130-132) pour réaliser une fonctionnalité de l'unité fonctionnelle (130-132),
- une interface de commande (250), dans lequel l'interface de commande (250) est conçue pour communiquer avec un système de commande (120) du plan de commande,
- un dispositif de stockage pour stocker une information de dispositif (212, 261, 262), dans lequel l'information de dispositif (212, 261, 262) comprend une association entre les signaux sur l'au moins une interface de terrain (140-142) et des signaux correspondants sur l'interface de commande (250) ainsi qu'une association entre les signaux sur l'interface de commande (250) et la fonctionnalité de l'unité fonctionnelle (130-132), et
- un dispositif de traitement (211, 221, 231) qui est conçu pour convertir, sur la base de l'information de dispositif (212, 261, 262), les signaux sur l'au moins une interface de terrain (140-142) en signaux sur l'interface de commande (250) et inversement,
dans lequel l'information de dispositif (212, 261, 262) est modifiable par l'intermédiaire d'une interface de configuration (171) du dispositif d'entrée/sortie (110-112), dans lequel l'interface de configuration est une interface séparée ou intégrée à l'interface de commande (250),
**caractérisé en ce que** le dispositif de traitement (211, 221, 231) est en outre conçu pour fournir des informations de temps d'exécution par l'intermédiaire de l'interface de configuration (171), dans lequel les informations de temps d'exécution comprennent au moins une des informations suivantes :
- des informations sur les fonctions fournies et leurs données cycliques et acycliques, et
- des informations de diagnostic.

2. Dispositif d'entrée/sortie configurable selon la revendication 1, dans lequel le dispositif de traitement (211, 221, 231) est en outre conçu pour fournir des données de base du dispositif d'entrée/sortie (110-112) par l'intermédiaire de l'interface de configuration (171),
dans lequel les données de base comprennent au moins une des caractéristiques suivantes :
- un indicateur d'identification, lequel identifie clairement le dispositif d'entrée/sortie (110-112) ;
- un indicateur de type, lequel indique un type du dispositif d'entrée/sortie (110-112) ; et
- un indicateur de stockage, lequel indique des caractéristiques du dispositif de stockage du dispositif d'entrée/sortie (110-112).

3. Dispositif d'entrée/sortie configurable selon la revendication 1 ou la revendication 2,
dans lequel le dispositif de traitement (211, 221, 231) est en outre conçu pour fournir des données d'aide à la configuration par l'intermédiaire de l'interface de configuration (171), dans lequel les données d'aide à la configuration comprennent au moins une des informations suivantes :
- une règle de configuration pour l'information de dispositif (212, 261, 262) ;
- une information de présentation pour présenter l'information de dispositif (212, 261, 262) sur une interface utilisateur ;
- une configuration standard, laquelle comprend au moins un exemple pour l'information de dispositif (212, 261, 262) ; et
- une représentation visuelle d'une vue du dispositif d'entrée/sortie (110-112) et/ou d'une représentation fonctionnelle du dispositif d'entrée/sortie (110-112).

4. Dispositif d'entrée/sortie configurable selon l'une quelconque des revendications 1-3,
dans lequel les informations de temps d'exécution comprennent en outre des valeurs de configuration pour la configuration des fonctions.

5. Dispositif d'entrée/sortie configurable selon l'une quelconque des revendications précédentes, dans lequel le dispositif de traitement (211, 221, 231) est en outre conçu pour établir automatiquement la communication avec le système de commande (120) sur la base des informations de dispositif (212, 261, 262).

6. Dispositif d'entrée/sortie configurable selon la revendication 5, dans lequel la communication avec le système de commande (120) s'effectue par l'intermédiaire d'un bus de terrain, dans lequel un type de bus de terrain comprend un type du bus de terrain parmi plusieurs types de bus de terrain prédéterminés différents.

7. Dispositif d'entrée/sortie configurable selon l'une quelconque des revendications précédentes, dans lequel l'interface de terrain (140-142) comprend au moins une connexion électrique (222, 223, 232, 233) par l'intermédiaire de laquelle les signaux sont transmis en tant que grandeurs de courant ou de tension associées.

8. Dispositif d'entrée/sortie configurable selon l'une quelconque des revendications précédentes, dans lequel le dispositif d'entrée/sortie (110-112) comprend en outre au moins un module d'entrée/sortie (220, 230) et une unité de tête (210), laquelle est couplée à l'au moins un module d'entrée/sortie (220, 230), dans lequel l'au moins un module d'entrée/sortie (220, 230) comprend l'au moins une interface de terrain (140-142) et dans lequel l'unité de tête (210) comprend l'interface de commande (250), et dans lequel l'unité de tête (210) est conçue pour être couplée à plusieurs modules d'entrée/sortie (220, 230) différents.

9. Système de commande configurable configuré pour commander une fonctionnalité d'une unité fonctionnelle d'une plateforme d'automatisation selon un programme d'utilisateur, dans lequel le système de commande (120) comprend :
- une interface de programme d'utilisateur (104, 105) configurée pour communiquer avec le programme d'utilisateur (101, 102),
- une interface de commande (150) configurée pour communiquer avec au moins un dispositif d'entrée/sortie (110-112) selon l'une quelconque des revendications 1-8, dans lequel le dispositif d'entrée/sortie (110-112) est conçu pour une communication de signaux d'un plan de commande de la plateforme d'automatisation (100), dans lequel les signaux concernent un capteur (201) ou un actionneur (202) d'un plan de terrain de la plateforme d'automatisation (100), dans lequel le capteur (201) ou l'actionneur (202) est associé à l'unité fonctionnelle (130-132) pour réaliser la fonctionnalité de l'unité fonctionnelle (130-132), et
- un dispositif de traitement (121), lequel est conçu pour convertir, sur la base d'une information de dispositif (212, 261, 262), laquelle comprend une association entre des signaux sur l'interface de commande (150) et la fonctionnalité de l'unité fonctionnelle (130-132), une communication par l'intermédiaire de l'interface de programme d'utilisateur (104, 105) avec le programme d'utilisateur (101, 102) en signaux sur l'interface de commande (150) et inversement.

10. Système de commande configurable selon la revendication 9, dans lequel le dispositif de traitement (121) est en outre conçu pour récupérer au moins une partie de l'information de dispositif (212, 261, 262) auprès du dispositif d'entrée/sortie (110-112) par l'intermédiaire de l'interface de commande (150), et/ou
d'établir automatiquement la communication avec le dispositif d'entrée/sortie (110-112) sur la base de l'information de dispositif (212, 261, 262).

11. Système de commande configurable selon l'une quelconque des revendications 9 ou 10, dans lequel le système de commande (120) est conçu pour communiquer avec le dispositif d'entrée/sortie (110-112) par l'intermédiaire d'un bus de terrain,
dans lequel un type du bus de terrain comprend un type de bus de terrain parmi plusieurs types de bus de terrain prédéterminés différents, dans lequel le dispositif de traitement (121) est en outre conçu pour établir automatiquement un type de bus de terrain à utiliser pour l'interface de commande (150) parmi les plusieurs types de bus de terrain prédéterminés sur la base de l'information de dispositif (212, 261, 262).

12. Système de commande configurable selon l'une quelconque des revendications 9-11, dans lequel un protocole sur l'interface de programme d'utilisateur (104, 105), avec lequel la fonctionnalité de l'unité fonctionnelle (13 à 132) est commandée, est indépendant d'un protocole sur l'interface de commande (150) et/ou est indépendant d'un type du capteur (201) ou d'un type de l'actionneur (202).

13. Plateforme d'automatisation avec un dispositif d'entrée/sortie configurable (110-112) selon l'une quelconque des revendications 1-8 et/ou un système de commande configurable (120) selon l'une quelconque des revendications 9-12.
